# EUROPÄISCHE PATENTSCHRIFT

(11) **EP 0 881 118 B1**
(45) Veröffentlichungstag und Bekanntmachung des Hinweises auf die Patenterteilung: **26.06.2002**
(21) Anmeldenummer: 98106949.5
(22) Anmeldetag: 16.04.1998
(51) Int. Cl.: B60Q 1/04

(54) **Befestigungseinrichtung für einen Scheinwerfer**
Mounting device for headlamp
Dispositif de fixation pour phare

(30) Priorität: 26.05.1997 DE 19721888
(43) Veröffentlichungstag der Anmeldung: 02.12.1998
(73) Patentinhaber: Volkswagen Aktiengesellschaft, 38436 Wolfsburg (DE)
(72) Erfinder: Schulz, Hans-Juergen, 38458 Velpke (DE)

(56) Entgegenhaltungen:
- EP-A- 0 653 327
- FR-A- 2 649 368

## Beschreibung

Die Erfindung betrifft eine Befestigungsvorrichtung für einen Scheinwerfer in einer aufbauseitigen Aufnahme eines Kraftfahrzeuges nach dem Oberbegriff des Anspruchs 1.

Es sind Kraftfahrzeug-Konstruktionen und Karosserieformen bekannt, bei denen eine Montage und Demontage eines Scheinwerfers von vorn vorgenommen wird oder vorgenommen werden muß, weil diese eine Montage vom Motorraum aus nicht zulassen, insbesondere wenn der Scheinwerfer in einem Kotflügel des Kraftfahrzeuges angeordnet ist.

Eine Befestigungseinrichtung für einen Scheinwerfer in einer aufbauseitigen Aufnahme eines Kraftfahrzeuges ist aus der deutschen Patentschrift DE 4311419 C2 bekannt. Die aufbauseitige Aufnahme, in welche der Scheinwerfer über eine Öffnung in einem Karosserieteil eingesetzt wird, weist an aufrechten in Fahrzeuglängsrichtung verlaufenden Seitenwandungen Führungseinrichtungen auf, die wiederum in Einschubrichtung offene Führungsbahnen besitzen. Jede der Führungsbahnen greifen zwei Zapfen des eingeschobenen Scheinwerfers ein. Der eingeschobene Scheinwerfer wird in seiner Endstellung in der Aufnahme mittels einer Verriegelungseinrichtung mit den Führungseinrichtungen mechanisch verbunden.

Eine andere Lösung ist aus der deutschen Offenlegungsschrift DE 196 32 688 A1 bekannt. Auch hier sind zur Führung des Scheinwerfers in den Führungseinrichtungen der Aufnahme am Gehäuse des Scheinwerfers zwei Zapfen vorgesehen.
Die in den genannten Druckschriften verwendeten punktförmigen Führungen des Scheinwerfergehäuses in den Führungsbahnen der Aufnahme durch die Verwendung jeweils zweier Zapfen hat den Nachteil, daß das Einführen des Scheinwerfers in die Aufnahme während der Montage eine genaue Ausrichtung erfordert, da jeder der Zapfen einzeln in die Führungsbahnen eingeführt werden muß. Eine Anordnung von mehreren Leuchtenmodulen die über Führungsschienen miteinander verbunden werden sind aus der EP-A-0 653 327 bekannt.

Die Aufgabe der Erfindung ist es, eine gattungsgemäße Befestigungsvorrichtung für einen Scheinwerfer derart weiterzubilden, daß die Ausrichtung des Scheinwerfers bezüglich der Aufnahme während der Montage vereinfacht wird.

Die Aufgabe wird durch die Merkmale des Patentanspruches 1 gelöst. Vorteilhafte Aus- und Weiterbildungen sind in den Unteransprüchen dargestellt.

Erfindungsgemäß sind bei einer gattungsgemäßen Befestigungsvorrichtung die Elemente des Scheinwerfergehäuses, welche in die in Einschuböffnung offenen Führungsbahnen zur Führung des Scheinwerfergehäuses eingreifen, als im wesentlichen sich axial über das Gehäuse erstreckende Führungselemente ausgebildet. Diese Führungselemente greifen während des Einschiebens des Scheinwerfers sofort in die Führungsbahnen ein und justieren den Scheinwerfer ab dem Beginn des Einsetzens.

Nach einer vorteilhaften Ausbildung der Erfindung bestehen die in die Führungsbahnen der aufbauseitigen Aufnahme eingreifenden Führungselemente aus zwei parallel verlaufenden Führungsschienen, welche jeweils eine sich axial zum Gehäuse erstreckende Gleitfläche für den Lauf in den Führungsbahnen aufweisen.

Desweiteren können die beiden Führungsbahnen in Einschubrichtung über eine Stirnfläche miteinander in Verbindung stehen.

Bei einer konzentrisch um eine in Fahrzeuglängsrichtung verlaufende Achse angeordneten Aufnahme kann eine Verriegelungseinrichtung aus einer konzentrisch um die Achse an der Innenwandung der Aufnahme angeordneten Gleitführung mit einem in dieser konzentrisch zu der Achse bewegbaren Gleitring mit wenigstens einem Element zum Hintergreifen eines fest am Scheinwerfer angeordneten Fixierungselementes gebildet sein. Dabei ist das Element zum Hintergreifen des Fixierungselementes derart ausgebildet, daß es das Fixierungselement des eingeschobenen Scheinwerfers bei einer Bewegung des Gleitringes erfaßt und entlang der in Fahrzeuglängsrichtung verlaufenden Achse die axiale Endstellung des Scheinwerfergehäuses zieht und daß der Gleitring in der axialen Endstellung fixiert ist.

Dabei kann die Aufnahme den Querschnitt eines offenen Ringes haben, wodurch der Aufwand gegenüber einem geschlossenen Ring reduziert ist und der Anordnungsraum in der Karosserie ein geringeres Volumen aufweisen muß.

Eine weitere Verriegelungseinrichtung wird aus einem schwenkbar direkt oder indirekt an mindestens einer Aufnahmewandung gelagerten Betätigungsmittel gebildet, das zur Fixierung des Scheinwerfergehäuses in der Aufnahme formschlüssig mit dem Gehäuse verbindbar ist. Durch die erfindungsgemäße Befestigungsvorrichtung wird eine einfache Montage eines Scheinwerfers in einer aufbauseitigen Aufnahme durch Einschieben des Scheinwerfers durch eine Öffnung eines Karosserieteils in die Aufnahme und Fixierung desselben durch die Verriegelungseinrichtung erreicht. Eine Demontage erfolgt auf die gleiche, einfache Art, nur mit umgekehrten Schritten.

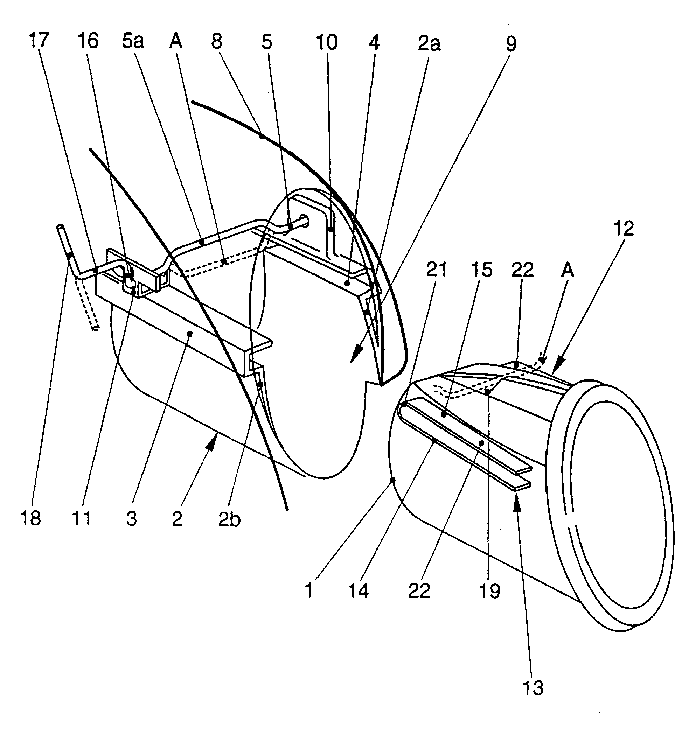

Nachfolgend wird die Erfindung anhand eines Ausführungsbeispiels näher beschrieben. Die Figur zeigt eine Darstellung des Befestigungseinrichtung.

In der Figur ist ein Kotflügel 8 mit einer Aufnahme 2 vor einen frontseitigen Scheinwerfer eines Kraftfahrzeuges dargestellt. Beide gemeinsam bilden die Einschuböffnung 9 für den Scheinwerfer. Den Seitenwandungen 2a und 2b der Aufnahme sind für die Führung des Scheinwerfergehäuses 1 bei der Montage des Scheinwerfers Führungsbahnen 3 und 4 ausgeformt, über die hinaus sich die Seitenwandungen 2a und 2b der Aufnahme mit dem Abschnitt 10 und einem Teil 11 fortsetzen. Für die Führung des Scheinwerfers 1 in die Führungsbahnen 3 und 4 sind in Höhe der Führungsbahnen Führungselemente 12 und 13 am Scheinwerfergehäuse 1 angeordnet, die bei der Montage des Scheinwerfers in die Aufnahme 2 des Kotflügels in die Führungsbahnen 3 und 4 eingreifen. Die Führungselemente 12 und 13 weisen jeweils zwei Führungsschienen 14 und 15 auf, die sich axial über das Scheinwerfergehäuse 1 erstrecken und in Einschubrichtung über die Stirnfläche 21 miteinander verbunden sind. Jede der Führungsschienen weist weiterhin eine Gleitfläche 22 auf, über welche die jeweilige Führungsschiene den Führungsbahnen 3 und 4 der Aufnahme beim Einsetzen des Scheinwerfers gleitet. Außerdem weist die Aufnahme 2 eine in dem Abschnitt 10 und dem an die Seitenwandung der Aufnahme 2 befestigten Teil 11 schwenkbar gelagerte Verriegelungskurbel 5 mit einem gekröpften Mittelbereich 5a auf. Die Verriegelungskurbel 5 setzt sich weiterhin einseitig außerhalb der Aufnahme mit mehreren abgewinkelten Abschnitten 16, 17, 18 in den Fahrzeuginnenraum fort, so daß sie von dort aus auf einfache Weise manuell betätigt werden kann. Zur Fixierung des Scheinwerfergehäuses 1 nach Erreichen seiner Endstellung in die Aufnahme 2 wird die Verriegelungskurbel 5 in die gestrichelt angedeutete Betätigungsstellung A gebracht, in welche ihr gekröpfter Bereich 5 a in einer auf der Oberseite des Scheinwerfergehäuses eingebrachte Ausnahme 19 eingreift, wodurch ein Herausnehmen oder Herausrutschen des Scheinwerfers aus der Aufnahme 2 verhindert wird.

Damit das Scheinwerfergehäuse 1 nicht über seine Endstellung hinaus in die Aufnahme eingeführt werden kann, ist ein nicht dargestellter Anschlag vorgesehen, der so angeordnet ist, daß nach dem Fixieren des Scheinwerfers die Lichtscheibe 20 des Scheinwerfers mit dem Kotflügel 8 eine Linie bildet.

### BEZUGSZEICHENLISTE

- 1: Scheinwerfergehäuse
- 2: Aufnahme
- 2a: Seitenwandung
- 2b: Seitenwandung
- 3: Führungsbahnen
- 4: Führungsbahnen
- 5: Verriegelungskurbel
- 5a: Mittelbereich
- 8: Kotflügel
- 9: Einschuböffnung
- 10: Abschnitt
- 11: Teil
- 12: Führungselemente
- 13: Führungselemente
- 14: Führungsschiene
- 15: Führungsschiene
- 16: Abschnitt
- 17: Abschnitt
- 18: Abschnitt
- 19: Ausnahme
- 20: Lichtscheibe
- 21: Stirnfläche
- 22: Gleitfläche
- A: Betätigungsstellung

## Patentansprüche

1. Befestigungsvorrichtung für einen Scheinwerfer mit mindestens einem eine Lichteinrichtung aufnehmenden Scheinwerfergehäuse (1) in einer aufbauseitigen Aufnahme (2) eines Kraftfahrzeuges mit an gegenüberliegenden Aufnahmewandungen (2a, 2b) angeordneten, sich in Fahrzeuglängsrichtung erstreckenden Führungseinrichtungen mit in Einschubrichtung offenen Führungsbahnen (3, 4) zur Führung des Scheinwerfergehäuses (1), in die Elemente des eingeschobenen Scheinwerfergehäuses (1) eingreifen und einer Verriegelungseinrichtung (5), die das Scheinwerfergehäuse (1) in seiner axialen Endstellung in der Aufnahme (2) fixiert, **dadurch gekennzeichnet, daß** die in die Führungsbahnen (3, 4) eingreifenden Führungselemente (12, 13) als sich im wesentlichen axial über das Scheinwerfergehäuse (1) erstreckende Führungselemente ausgebildet sind, und daß die in die Führungsbahnen (3, 4) der aufbauseitigen Aufnahme (2) eingreifenden Führungselemente (12, 13) genau zwei parallel verlaufende Führungsschienen (14, 15) aufweisen, welche eine sich axial zum Scheinwerfergehäuse (1) erstreckende Gleitfläche (22) besitzen.

2. Befestigungseinrichtung nach Anspruch 1, **dadurch gekennzeichnet, daß** die beiden Führungsschienen (14, 15) zumindest in Einschubrichtung miteinander verbunden sind.

3. Befestigungseinrichtung einem der Ansprüche 1 und 2, **dadurch gekennzeichnet, daß** die Verriegelungseinrichtung aus einem schwenkbar direkt oder indirekt an mindestens einer Aufnahmewandung (2a, 2b) gelagerten Betätigungsmittel (5) besteht, das zur Fixierung des Scheinwerfergehäuses (1) in der Aufnahme (2) formschlüssig mit dem Scheinwerfergehäuse verbindbar ist.

4. Befestigungseinrichtung nach einem der Ansprüche 1 bis 3, **dadurch gekennzeichnet, daß** die Aufnahme (2) konzentrisch um eine in Fahrzeuglängsrichtung verlaufende Achse angeordnet ist und daß die Verriegelungseinrichtung aus einer konzentrisch um die Achse an der Innenwandung der Aufnahme (2) angeordneten Gleitführung mit einem in dieser konzentrisch zur Achse bewegbaren Gleitring mit wenigstens einem Element zum Hintergreifen eines fest am Scheinwerfergehäuse (1) angeordneten Fixierungselementes gebildet ist, wobei das Element derart ausgebildet ist, daß es das Fixierungselement des eingeschobenen Scheinwerfergehäuses (1) bei einer Bewegung des Gleitringes erfaßt und entlang der Achse die Befestigungseinrichtung zieht und daß der Gleitring (6) in der Befestigungsstellung fixiert ist.

## Claims

1. Fastening device for a headlamp, with at least one headlamp housing (1) receiving a light arrangement and located in a body-side receptacle (2) of a motor vehicle, with guide means which are arranged on opposite receptacle walls (2a, 2b) and extending in the vehicle longitudinal direction and which have guide tracks (3, 4) for guiding the headlamp housing (1) which are open in the push-in direction and into which elements of the pushed-in headlamp housing (1) engage, and with a locking means (5) which fixes the headlamp housing (1) in its axial end position in the receptacle (2), **characterized in that** the guide elements (12, 13) engaging into the guide tracks (3, 4) are designed as guide elements extending essentially axially over the headlamp housing (1), and **in that** the guide elements (12, 13) engaging into the guide tracks (3, 4) of the body-side receptacle (2) have exactly two parallel-running guide rails (14, 15) which possess a sliding surface (22) extending axially relative to the headlamp housing (1).

2. Fastening device according to Claim 1, **characterized in that** the two guide rails (14, 15) are connected to one another at least in the push-in direction.

3. Fastening device according to one of Claims 1 and 2, **characterized in that** the locking means consists of an actuating means (5) which is pivotally mounted directly or indirectly on at least one receptacle wall (2a, 2b) and which can be connected positively to the headlamp housing (1) in order to fix said headlamp housing in the receptacle (2).

4. Fastening device according to one of Claims 1 to 3, **characterized in that** the receptacle (2) is arranged concentrically about an axis running in the vehicle longitudinal direction, and **in that** the locking means is formed from a sliding guide arranged concentrically about the axis on the inner wall of the receptacle (2) and having a sliding ring movable in said sliding guide concentrically to the axis and with at least one element for engaging behind a fixing element arranged firmly on the headlamp housing (1), the element being designed in such a way that it grips the fixing element of the pushed-in headlamp housing (1) during a movement of the sliding ring and pulls said fixing element along the axis of the fastening device, and in such a way that the sliding ring (6) is fixed in the fastening position.

## Revendications

1. Dispositif de fixation pour un phare, avec au moins un boîtier de phare (1) recevant un dispositif d'éclairage dans un logement (2) situé du côté de la carrosserie d'un véhicule automobile, avec des dispositifs de guidage disposés sur des parois opposées (2a, 2b) du logement et s'étendant dans le sens de la longueur du véhicule, qui présentent des pistes de guidage (3, 4) ouvertes dans la direction d'insertion, pour le guidage du boîtier de phare (1) et dans lesquelles s'engagent des éléments du boîtier de phare (1) insérés, et avec un dispositif de verrouillage (5) qui fixe le boîtier de phare (1) dans le logement (2) dans sa position axiale terminale, **caractérisé en ce que** les éléments de guidage (12, 13) s'engageant dans les pistes de guidage (3, 4) sont configurés comme éléments de guidage s'étendant essentiellement axialement dans le boîtier de phare (1), et **en ce que** les éléments de guidage (12, 13) s'engageant dans les pistes de guidage (3, 4) du logement (2) situé du côté de la carrosserie présentent exactement deux rails de guidage (14, 15) qui s'étendent en parallèle et qui possèdent une surface de glissement (22) qui s'étend axialement par rapport au boîtier de phare (1).

2. Dispositif de fixation selon la revendication 1, **caractérisé en ce que** les deux rails de guidage (14, 15) sont reliés l'un à l'autre au moins dans la direction d'insertion.

3. Dispositif de fixation selon l'une des revendications 1 et 2, **caractérisé en ce que** le dispositif de verrouillage est constitué d'un moyen d'actionnement (5) monté à pivotement direct ou indirect sur au moins une paroi (2a, 2b) du logement, et qui peut être relié en correspondance géométrique au boîtier de phare pour la fixation du boîtier de phare (1) dans le logement (2).

4. Dispositif de fixation selon l'une des revendications 1 à 3, **caractérisé en ce que** le logement (2) est disposé concentriquement autour d'un axe qui s'étend dans le sens de la longueur du véhicule, et **en ce que** le dispositif de verrouillage est formé d'un guide de glissement disposé concentriquement autour de l'axe sur la paroi intérieure du logement (2), avec une bague de glissement qui peut être déplacée dans ce logement concentriquement par rapport à l'axe et qui porte au moins un élément pour accrocher par l'arrière un élément de fixation disposé fixement sur le boîtier de phare (1), l'élément étant configuré de telle sorte qu'il saisit l'élément de fixation du boîtier de phare (1) inséré lors d'un déplacement de la bague de glissement et tire le dispositif de fixation le long de l'axe, et **en ce que** la bague de glissement (6) est immobilisée dans la position de fixation.
